# EUROPEAN PATENT APPLICATION

(11) **EP 4 675 442 A1**
(43) Date of publication of application: **07.01.2026**
(21) Application number: 23928457.3
(22) Date of filing: 22.12.2023
(51) Int. Cl.: G06F 11/36

(54) **METHOD AND APPARATUS FOR PROCESSING SOURCE CODE, AND STORAGE MEDIUM**

(30) Priority: 17.03.2023 CN 202310264708; 25.06.2023 CN 202310752997
(71) Applicant: Huawei Cloud Computing Technologies Co., Ltd., Guizhou 550025 (CN)
(72) Inventor: LIU, Hao, Shenzhen, Guangdong 518129 (CN); LI, Mingsheng, Shenzhen, Guangdong 518129 (CN); JIA, Jingnan, Shenzhen, Guangdong 518129 (CN)
(74) Representative: Körber, Martin Hans
(86) International application number: PCT/CN2023/141089
(87) International publication number: WO 2024/193153

(57) **Abstract**

This application discloses a source code processing method and apparatus, and a storage medium, and pertains to the computer field. The method includes: receiving an instruction for starting a code test, and adding a private variable to at least one first method included in first source code, where the at least one first method is a method that is not executed in the first source code, and the private variable in the first method is used to record execution of each code statement in the first method when the first method is executed; when a test on the first source code is completed by using a first test case, obtaining first code coverage information based on the private variable in the at least one first method, where the first code coverage information describes execution of a code statement in the at least one first method; and displaying a first code coverage result based on the first code coverage information, where the first code coverage result includes code coverage of the first source code. According to this application, the code coverage is automatically obtained, so that costs are reduced.

## Description

### TECHNICAL FIELD

This application relates to the computer field, and in particular, to a source code processing method and apparatus, and a storage medium.

### BACKGROUND

Code coverage is a proportion of executed code to total code during service running, and is an effective and objective metric for measuring source code quality of a service. After source code of the service is developed, the source code of the service may be tested, and code coverage may be obtained in a process of testing the source code.

In a related technology, manual participation of a skilled person is required to obtain the code coverage of the source code. Manual participation of the skilled person requires the skilled person to perceive a process of obtaining the code coverage, which increases costs.

### SUMMARY

This application provides a source code processing method and apparatus, and a storage medium, to automatically obtain code coverage and reduce costs. The technical solutions are described below.

According to a first aspect, this application provides a source code processing method. The method is applied to a code test platform, and the code test platform is configured to test first source code by using a first test case. In the method, an instruction for starting a code test is received, where the instruction for starting the code test instructs the code test platform to start a test on the first source code. A private variable is added to at least one first method included in the first source code, where the at least one first method is a method that is not executed in the first source code, and the private variable in the first method is used to record execution of each code statement in the first method when the first method is executed. When the test on the first source code is completed by using the first test case, first code coverage information is obtained based on the private variable in the at least one first method, where the first code coverage information describes execution of a code statement in the at least one first method. A first code coverage result is displayed based on the first code coverage information, where the first code coverage result includes code coverage of the first source code.

The test on the first source code is started when the instruction for starting the code test is received. After the test on the first source code is started, the private variable is added to the at least one first method that is not executed in the first source code. In this way, when each of the at least one first method is executed, the private variable in the first method is used to record execution of each code statement in the first method. When the test on the first source code is completed by using the first test case, the first code coverage information is obtained based on the private variable in the at least one first method. The first code coverage information describes execution of the code statement in the at least one first method, and the code coverage of the first source code is displayed based on the first code coverage information. Only after the test on the first source code is started, the private variable is added to the at least one first method that is not executed, and therefore the instruction for starting the code test is not modified in an instrumentation scenario during startup. After the test on the first source code is started, the private variable is automatically added to the method that is not executed in the first source code, and a user does not perceive an entire process of obtaining the first code coverage information. In this way, the code coverage is automatically obtained. This reduces costs, reduces costs of maintaining the code test platform, and improves flexibility of using the automated code test platform by the user.

In a possible implementation, the first source code further includes a second method, the second method is a method that is being executed when the private variable is added to the at least one first method. Thread stack frame information of the second method is obtained, where the thread stack frame information is used to record execution of each code statement in the second method. A code statement that is executed in the second method is determined based on the thread stack frame information, where the first code coverage information further describes execution of a code statement in the second method. In this way, the first code coverage information is enriched, and code execution of the second method is not omitted.

In another possible implementation, the first code coverage information further describes execution of each code statement in a first static code block, the first static code block is a static code block that has been executed in the first source code before the private variable is added to the at least one first method, and each code statement in the first static code block is executed. In this way, the first code coverage information is enriched, and code execution of the first static code block is not omitted.

In another possible implementation, the first code coverage information further describes execution of each code statement in a constructor of a target class, the target class is a class that includes one constructor and that has been executed in the first source code before the private variable is added to the at least one first method, and each code statement in the constructor of the target class is executed. In this way, the first code coverage information is enriched, and code execution of the constructor of the target class is not omitted.

In another possible implementation, the private variable in the first method includes an element corresponding to each code statement in the first method. An assignment statement corresponding to an i^{th} code statement in the first method is added, where i=1, 2, 3, ..., the assignment statement is used to set, when the i^{th} code statement is executed, a value of an element corresponding to the i^{th} code statement to a target value, and the target value indicates that the i^{th} code statement is executed. In this way, the private variable records the execution of the code statement in the first method by using the assignment statement in the first method.

In another possible implementation, the first code coverage information includes identification information of a code statement that is executed in the at least one first method. A ranking of each first method in the first source code and identification information of a start code statement and identification information of an end code statement in each first method are obtained. A value of each element included in a private variable in each first method is obtained. The first code coverage information is obtained based on the value of each element included in the private variable in each first method, the ranking of each first method, and the identification information of the start code statement and the identification information of the end code statement in each first method.

Because the at least one method is stored out of order on the code test platform, the ranking of the at least one first method in the first source code may be restored based on the ranking of each first method and the identification information of the start code statement and the identification information of the end code statement in each first method, so that precision of the obtained first code coverage information is improved.

In another possible implementation, the code test platform includes a first test device and a second test device, the first source code includes a first part and a second part, the first test device is configured to test the first part by using the first test case, the second test device is configured to test the second part by using the first test case, and the first code coverage information describes execution of a code statement in the first part. A second private variable is added to at least one third method included in the first source code in the second test device, where the at least one third method is a method that is not executed in the first source code in the second test device. When completing the test on the first source code by using the first test case, the second test device obtains second code coverage information based on a private variable in a third method included in the second part, where the second code coverage information describes execution of a code statement in the second part. Overall code coverage information corresponding to the first source code is obtained based on the first code coverage information and the second code coverage information. The first code coverage result is displayed based on the overall code coverage information.

In this way, different parts of the first source code may be tested by a plurality of test devices, then code coverage information corresponding to a part of source code tested by each test device is obtained, and the overall code coverage information corresponding to the first source code is obtained based on the code coverage information corresponding to each part of the source code. Therefore, it is ensured that the first source code is tested by a plurality of test devices in parallel, so that test efficiency is improved.

In another possible implementation, a private variable is added to a method other than the at least one first method in the first source code. In this way, it is ensured that the private variable is added to each method in the first source code, and execution of a code statement in each method is collected by using the private variable in each method.

In another possible implementation, the code coverage included in the first code coverage result is code coverage obtained when the first source code is executed by using the first test case, and the code test platform is further configured to test the first source code by using a second test case after the test on the first source code is completed by using the first test case. When the test on the first source code is completed by using the second test case, third code coverage information is obtained based on a private variable in each method included in the first source code, where the third code coverage information describes execution of a code statement in the first source code. A second code coverage result is displayed based on the first code coverage information and the third code coverage information, where the second code coverage result includes code coverage obtained when the first source code is executed by using the first test case and the second test case.

Because each code statement of the first source code may not be executed by using one test case, code coverage information corresponding to each test case is obtained, and the code coverage of the first source code may be accurately obtained based on the code coverage information corresponding to each test case.

In another possible implementation, change information is obtained, where the change information describes a difference part between second source code and the first source code, the first source code and the second source code are source code of two versions of a same service, and a version of the second source code is earlier than a version of the first source code; Code coverage information corresponding to the difference part is obtained based on the change information and the first code coverage information, where the code coverage information corresponding to the difference part describes execution of a code statement in the difference part. A code coverage result of the difference part is displayed based on the code coverage information corresponding to the difference part, where the code coverage result of the difference part includes code coverage of the difference part.

The difference part is newly added content in the first source code, and execution of the code statement in the difference part may be content that the user is interested in. The code coverage result of the difference part is displayed, so that a user requirement can be met, and the user learns of code coverage information of a newly added part in the source code of a new version.

In another possible implementation, at least one constituent part included in the difference part is obtained. For each constituent part, code coverage information corresponding to the constituent part is obtained based on the code coverage information corresponding to the difference part, where the code coverage information corresponding to the constituent part describes execution of a code statement in the constituent part. A code coverage result of the constituent part is displayed based on the code coverage information corresponding to the constituent part, where the code coverage result of the constituent part includes code coverage of the constituent part. Each constituent part of the difference part may be content that the user is interested in. The code coverage result of each component is displayed, so that the user requirement can be met.

In another possible implementation, the at least one constituent part includes one or more of the following: at least one branch in the difference part, at least one method in the difference part, or at least one class in the difference part.

According to a second aspect, this application provides a source code processing apparatus, configured to perform the method according to any one of the first aspect or the possible implementations of the first aspect. Specifically, the apparatus includes units configured to perform the method according to any one of the first aspect or the possible implementations of the first aspect.

According to a third aspect, this application provides a computing device cluster. The cluster includes at least one computing device, and each device in the at least one computing device includes at least one processor and at least one memory. The at least one memory stores computer-readable instructions, and the at least one processor executes the computer-readable instructions, for the cluster to implement the method according to any one of the first aspect or the possible implementations of the first aspect.

According to a fourth aspect, this application provides a computer program product. The computer program product includes a computer program stored in a computer-readable storage medium, and the computer program is loaded by a processor to implement the method according to any one of the first aspect or the possible implementations of the first aspect.

According to a fifth aspect, this application provides a computer-readable storage medium, configured to store a computer program. The computer program is loaded by a processor to perform the method according to any one of the first aspect or the possible implementations of the first aspect.

According to a sixth aspect, this application provides a chip. The chip includes a memory and a processor. The memory is configured to store computer instructions, and the processor is configured to invoke the computer instructions from the memory and run the computer instructions, to perform the method according to any one of the first aspect or the possible implementations of the first aspect.

### BRIEF DESCRIPTION OF DRAWINGS

FIG. 1 is a diagram of a structure of a code test platform according to an embodiment of this application;
FIG. 2 is a diagram of a structure of another code test platform according to an embodiment of this application;
FIG. 3 is a flowchart of a source code processing method according to an embodiment of this application;
FIG. 4 is a diagram of a piece of source code according to an embodiment of this application;
FIG. 5 is a diagram of another piece of source code according to an embodiment of this application;
FIG. 6 is a diagram of source code to which a private variable is added according to an embodiment of this application;
FIG. 7 is a diagram of an interface according to an embodiment of this application;
FIG. 8 is a diagram of a structure of a source code processing apparatus according to an embodiment of this application;
FIG. 9 is a diagram of a structure of a computing device according to an embodiment of this application;
FIG. 10 is a diagram of a structure of a source code processing cluster according to an embodiment of this application; and
FIG. 11 is a diagram of a structure of another source code processing cluster according to an embodiment of this application.

### DESCRIPTION OF EMBODIMENTS

The following further describes in detail embodiments of this application with reference to accompanying drawings.

Source code is a series of computer language instructions. The source code herein may be source code written in a Java language, or source code written in a Python language, or the like. After the source code is compiled, the source code needs to be tested to obtain at least one test metric, and the at least one test metric may be used to measure quality of the source code.

The at least one test metric includes code coverage. The code coverage is a proportion of a quantity of executed code statements in the source code to a total quantity of code statements in the source code when the source code is executed. Code coverage information of the source code may be obtained when the source code is tested, and the code coverage information describes the executed code statement in the source code. In this way, the quantity of executed code statements in the source code may be obtained by using the code coverage information, and the code coverage of the source code may be obtained through calculation based on the quantity of code statements and the total quantity of code statements included in the source code.

For example, the code coverage information may include identification information of an executed code statement in the source code, and the quantity of executed code statements in the source code may be obtained by collecting statistics on the identification information of the executed code statement in the source code. Statistics on the total quantity of code statements included in the source code are collected, and then the code coverage is obtained by calculating the proportion of the quantity of executed code statements to the total quantity of code statements.

Before testing the source code, a skilled person needs to first manually modify a startup command for starting a test, so that the startup command includes a storage path of the source code, a storage path of a code coverage tool, a configuration parameter, and the like, and then send the startup command to a test device. The test device loads the code coverage tool based on the storage path that is of the code coverage tool and that is included in the startup command, configures the code coverage tool based on the configuration parameter, and then loads the source code to a memory of the test device based on the storage path of the source code. In a process of loading the source code, a global static variable is added to the source code by using the code coverage tool. The static variable includes an element corresponding to each code statement in the source code. Each time a code statement is loaded to the memory of the test device, an assignment statement corresponding to the code statement is added to the memory of the test device. For each code statement in the source code, the static variable includes the element corresponding to the code statement. If the code statement is executed, the assignment statement corresponding to the code statement uses the element to record that the code statement is executed. In this way, after the test on the source code is completed, the code coverage information of the source code may be obtained based on each element included in the static variable.

According to the method, although the code coverage information of the source code can be obtained, the skilled person needs to intrusively modify the startup command, which is difficult to maintain. The skilled person needs to perceive an access process of the code coverage tool to a great extent, and needs to download and depend on a parameter added to the startup command. In addition, a code in a production environment needs to be distinguished from that in a test environment, which causes extra overheads.

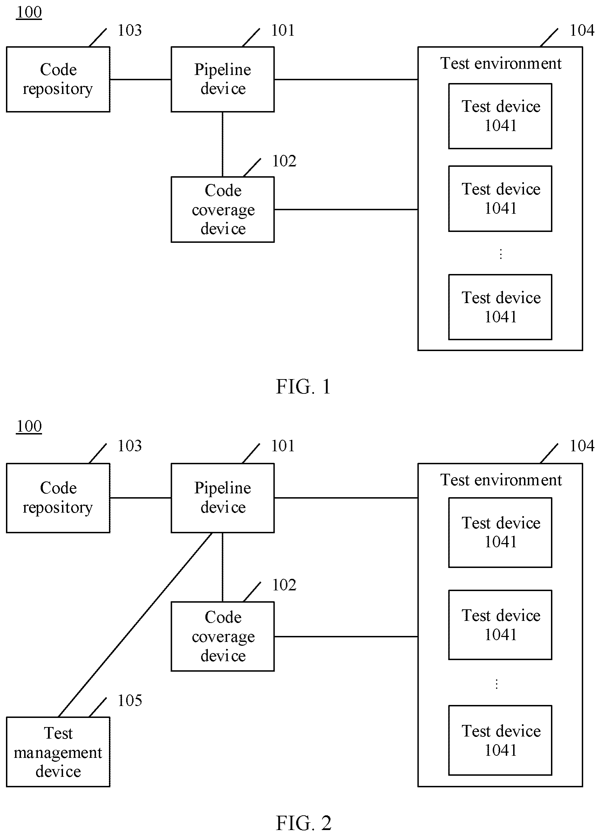

As shown in FIG. 1, an embodiment of this application provides a code test platform 100. The code test platform 100 includes a pipeline device 101, a code coverage device 102, a code repository 103, and a test environment 104. The test environment 104 includes at least one test device 1041.

The pipeline device 101 separately communicates with the code coverage device 102, the code repository 103, and each test device 1041 in the test environment 104.

The code repository 103 is configured to store at least one piece of source code, where the at least one piece of source code is source code of at least one service. Optionally, the source code stored in the code repository 103 may be bytecode or the like. The at least one service may be a microservice or the like.

In some embodiments, the test device 1041 included in the test environment 104 may be a physical device (for example, a server or a terminal device), a virtual machine, a container, and/or the like. The pipeline device 101 may be a single device or a cluster, the code coverage device 102 may be a single device or a cluster, and the code repository 103 may be a storage device or a storage cluster.

For each of the at least one piece of source code, for ease of description, the source code is referred to as first source code. The pipeline device 101 includes a test service, and the test service is used to test the first source code. The code coverage device 102 subscribes to the test service on the pipeline device 101. In this way, when testing the first source code by using the test service, the pipeline device 101 notifies the code coverage device 102.

In some embodiments, the pipeline device 101 receives an instruction for starting a code test, where the instruction for starting the code test instructs the code test platform 100 to start a test on the first source code; and obtains the first source code from the code repository 103 based on the instruction for starting the code test, and loads the first source code to the at least one test device 1041 in the test environment 104. When the at least one test device 1041 includes one test device 1041, the test device 1041 tests the entire first source code. When the at least one test device 1041 includes a plurality of test devices 1041, each test device 1041 tests a part of content of the first source code.

Optionally, the pipeline device 101 loads the first source code to a memory of the at least one test device 1041. For each of the at least one test device 1041, the test device 1041 executes the first source code when the first source code is loaded to the memory of the test device 1041.

After the first source code is loaded to the memory of the test device 1041, a static variable, a static method, and the like are not allowed to be added to the first source code stored in the memory of the test device 1041. Generally, the static variable is located in a main function of the first source code, and is a global variable. Each function in the first source code may access the global variable. That is, after the first source code is loaded to the memory of the test device 1041, the global variable is not allowed to be added to the first source code stored in the memory of the test device 1041.

When initiating the test on the first source code, the pipeline device 101 further sends a test notification message to the code coverage device 102. The test notification message indicates to start a test on the first source code on the at least one test device 1041.

The code coverage device 102 receives the test notification message, and sends a code coverage request to the at least one test device. The code coverage request is used to request to obtain code coverage information of the first source code.

For each of the at least one test device 1041, for ease of description, the test device 1041 is referred to as a first test device. The first test device 1041 receives the code coverage request, and adds, based on triggering of the code coverage request, a private variable to at least one first method included in the first source code stored in the memory of the first test device 1041. The at least one first method is a method that is not executed in the first source code, and the private variable in the first method is used to record execution of each code statement in the first method when the first method is executed.

After loading the first source code to the memory of the at least one test device 1041, the first test device 1041 may receive a first test case, and test the first source code based on the first test case. When the test on the first source code is completed by using the first test case, first code coverage information is obtained based on the private variable in the at least one first method, where the first code coverage information describes a code statement that is executed in the at least one first method. The first code coverage information is sent to the code coverage device 102. The code coverage device 102 displays a first code coverage result based on the first code coverage information, where the first code coverage result includes code coverage of the first source code.

In some embodiments, a skilled person may configure at least one test case on the pipeline device 101, and the at least one test case includes the first test case. The pipeline device 101 may send the first test case to the at least one test device 1041, for the at least one test device 1041 to test the first source code by using the first test case. After the test on the first source code is completed by using the first test case, the pipeline device 101 may further send a second test case to the at least one test device 1041, for the at least one test device 1041 to test the first source code by using the second test case. The second test case is a test case other than the first test case in the at least one test case.

In some embodiments, as shown in FIG. 2, the code test platform 100 further includes a test management device 105. The test management device 105 communicates with the pipeline device 101 and each test device 1041 in the test environment 104.

After loading the first source code to the at least one test device 1041 included in the test environment 104, the pipeline device 101 sends the at least one test case to the test management device 105. After receiving the at least one test case, the test management device 105 sends the first test case to the at least one test device 1041, for the at least one test device 1041 to test the first source code by using the first test case. After the test on the first source code is completed by using the first test case, the test management device 105 may further send a second test case to the at least one test device 1041, for the at least one test device 1041 to test the first source code by using the second test case.

After the pipeline device 101 starts to test the first source code on the at least one test device 1041, the code coverage device 102 sends a code coverage request to the at least one test device 1041, to request to obtain code coverage information of the first source code from the at least one test device 1041. In this way, the code coverage information is requested to be obtained only after a process of testing the first source code starts, so that there is no need to modify a startup command for start a test, and the skilled person does not perceive a process of obtaining the code coverage information. Therefore, the code coverage information can be automatically obtained, thereby reducing labor costs.

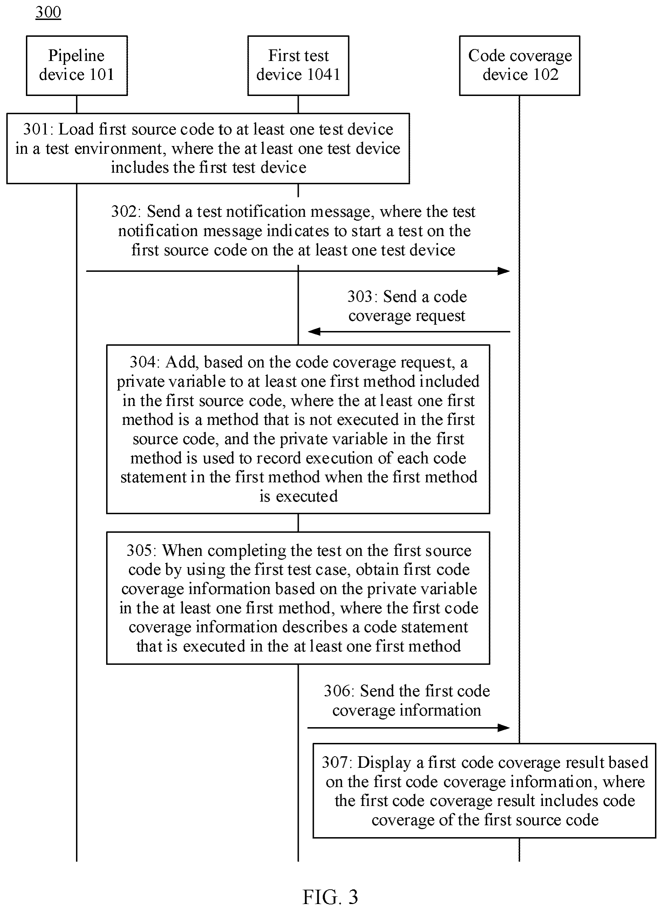

As shown in FIG. 3, an embodiment of this application provides a source code processing method 300. The method 300 is applied to the code test platform 100 shown in FIG. 1 or FIG. 2. The method 300 includes the following procedure.

Step 301: A pipeline device receives an instruction for starting a code test, and loads first source code to at least one test device in a test environment, where the at least one test device includes a first test device.

A code repository stores source code of at least one service. When a user needs to test the source code of the at least one service in the code repository, the instruction for starting the code test is triggered to the pipeline device.

In some embodiments, the pipeline device may display, to the user, an interface for starting the test. The interface includes a startup button. The user may tap the startup button to trigger, to the pipeline device, the instruction for starting the code test. Alternatively, the user inputs, on a terminal device corresponding to the user, the instruction for starting the code test, and the terminal device triggers, to the pipeline device, the instruction for starting the code test.

The pipeline device receives the instruction for starting the code test, and obtains source code of a service from the code repository. For ease of description, the service is referred to as a first service, and the source code of the service is referred to as first source code. The first source code is loaded to the at least one test device included in the test environment.

For each of the at least one test device, when the first source code is loaded to a memory of each test device, each test device starts to execute the first source code.

In some embodiments, after the test on the first source code is completed, the pipeline device obtains second source code from the code repository, where the second source code is source code of a second service, and the second service is a service other than the first service; and then tests the second source code according to the foregoing process of testing the first source code.

In some embodiments, when the first source code is loaded to a memory of the first test device, the first test device further obtains an index file of the first source code. The index file includes a first correspondence and a second correspondence. The first correspondence is used to store a correspondence between identification information of each class in the first source code and identification information of each method included in each class. The second correspondence is used to store a correspondence between a ranking of each method, and identification information of a start code statement and identification information of an end code statement in each method. Optionally, identification information of a code statement may be content such as a line number of the code statement in the first source code. For any class in the first source code, identification information of the class may include a fully qualified class name of the class, and the like.

In some embodiments, each method included in any class in the first source code may be stored out of order in the memory of the first test device. In other words, for each method included in any class in the first source code, a ranking of each method stored in the memory of the first test device may be different from or the same as an actual ranking of the method in the class.

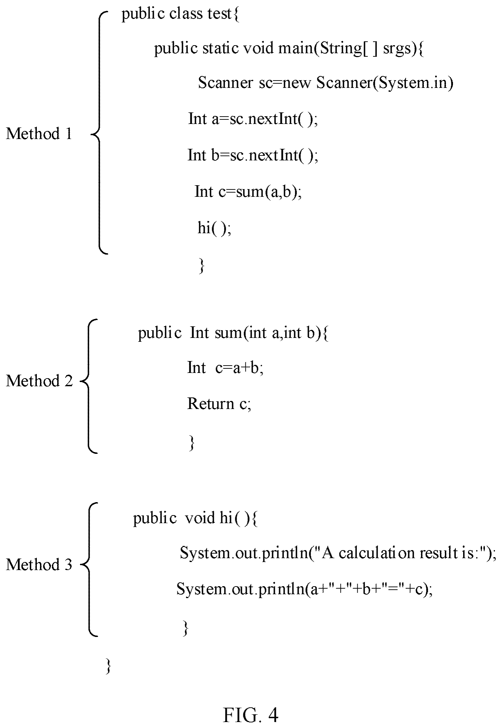

For example, refer to a class in the first source code shown in FIG. 4, the class includes a method 1, a method 2, and a method 3. After the first source code is loaded to the memory of the first test device, a storage sequence of the method 1, the method 2, and the method 3 in the memory of the first test device may be out of order, or may not be out of order. To be specific, the storage sequence of the three methods in the memory of the first test device may be: the method 3, the method 2, and the method 1; or the method 2, the method 3, and the method 1; or the method 1, the method 3, and the method 2; or the method 1, the method 2, the method 3; or the like.

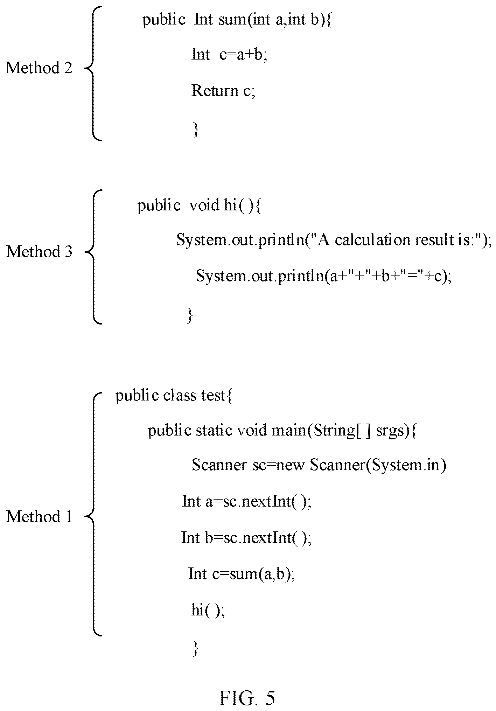

For example, as shown in FIG. 5, it is assumed that the storage sequence of the three methods in the memory of the first test device is: the method 2, the method 3, and the method 1 after the first source code shown in FIG. 4 is loaded to the memory of the first test device.

In some embodiments, when starting the test on the first source code, the pipeline device further allocates a pipeline identifier to the first source code, obtains pipeline details of the first source code, and correspondingly stores the pipeline identifier of the first source code and the pipeline details of the first source code in a correspondence between a pipeline identifier and pipeline details.

The pipeline details of the first source code include one or more pieces of the following information:
an environment type of the test environment, an address of the at least one test device, a storage address of the first source code in the code repository, change information, identification information of at least one test case, or the like. The change information indicates a difference part between the second source code and the first source code. The second source code and the first source code are source code of two different versions of the first service, and a version of the second source code is earlier than a version of the first source code.

In some embodiments, in addition to the test environment, there is a production environment. The test environment is used to test the first source code, and the production environment is used to run the first source code, to provide the first service for the user.

In some embodiments, the at least one test case may be configured by a skilled person on the pipeline device.

In some embodiments, the second source code is changed to obtain the first source code, the change information includes a first commit (commit) point and a second commit point, the first commit point is used to record a change start operation and operation content of the change start operation, and the second commit point is used to record a change end operation and operation content of the change end operation. The difference part may be obtained based on the first commit point and the second commit point. Alternatively, the change information includes a start location and an end location of the difference part in the first source code.

In some embodiments, the pipeline device may further send the at least one test case to a test management device.

Step 302: The pipeline device sends a test notification message to a code coverage device, where the test notification message indicates to start a test on the first source code on the at least one test device.

The code coverage device subscribes to a test service on the pipeline device in advance. When starting the test on the first source code by using the test service, the pipeline device sends the test notification message to the code coverage device.

In some embodiments, the test notification message further includes the pipeline identifier corresponding to the first source code.

Step 303: The code coverage device receives the test notification message, and sends a code coverage request to the at least one test device, where the code coverage request is used to request to obtain code coverage information of the first source code.

In step 303, the code coverage device receives the test notification message, and obtains, based on the pipeline identifier that corresponds to the first source code and that is included in the test notification message, the pipeline details of the first source code from the correspondence that is between the pipeline identifier and the pipeline details and that is included in the pipeline device.

The pipeline details of the first source code include an address of at least one test device in which the first source code is deployed in the test environment. The code coverage device sends the code coverage request to the at least one test device based on the address of the at least one test device.

In some embodiments, the pipeline details of the first source code include identification information of at least one test case, the code coverage request may further include the identification information of the at least one test case, and the code coverage request is used to request to obtain code coverage information corresponding to each of the at least one test case.

In some embodiments, the code coverage request further includes a code coverage unit, and the code coverage unit is configured to obtain the code coverage information of the first source code. Optionally, the code coverage unit may automatically add a private variable to each method of the first source code, and may add, to each method, an assignment statement corresponding to each code statement included in the method. For an assignment statement corresponding to any code statement in the method, the assignment statement is used to record execution of the code statement in the private variable in the method when the code statement is executed.

In some embodiments, the code coverage unit may be a plug-in, a program, or the like configured to obtain the code coverage information. For example, the code coverage unit may be a local probe array strategy (local probe array strategy) or the like.

In some embodiments, the pipeline details of the first source code further include an environment type of the test environment, and the code coverage device determines whether an environment corresponding to the environment type is the test environment. If the environment corresponding to the environment type is the test environment, it indicates that a pipeline platform tests the first source code, and sends the code coverage request to the at least one test device. If the environment corresponding to the environment type is the production environment, it indicates that a pipeline platform provides the first service for the user by using the first source code. In this case, the code coverage platform does not need to send the code coverage request.

The code coverage platform can automatically identify whether a current environment is the test environment or the production environment. In this way, the production environment can be isolated from the test environment. When starting the test, the user does not need to perceive the test environment and the production environment, and sends the instruction for starting the code test to the pipeline platform when the test is required. After receiving the instruction, the pipeline platform loads the first source code to the test device in the test environment.

In some embodiments, a code coverage unit corresponding to the environment type may be deployed in the at least one test device in advance. In this way, in step 303, the code coverage request may not include the code coverage unit corresponding to the environment type.

For example, a type of the at least one test device may be a physical device, a virtual machine, a container, or the like.

Step 304: The first test device receives the code coverage request, and adds, based on the code coverage request, a private variable to at least one first method included in the first source code, where the at least one first method is a method that is not executed in the first source code, and the private variable in the first method is used to record execution of each code statement in the first method when the first method is executed.

In step 304, the pipeline device loads the first source code to the memory of the first test device, and the first test device starts to execute the first source code. After the pipeline device starts the test on the first source code, the pipeline device sends the test notification message to the code coverage device, and the code coverage device sends the code coverage request to the at least one test device. Therefore, when receiving the code coverage request, the first test device has executed a part of content in the first source code.

In step 304, in addition to adding the private variable to the at least one first method that is not executed and that is included in the first source code, the first test device may further add a private variable to a method other than the at least one first method in the first source code. In other words, the first test device adds the private variable to each method included in the first source code.

In some embodiments, for each method included in the first source code, in addition to adding the private variable to the method, the assignment statement corresponding to each code statement included in the method is further added to the method. For each code statement, the assignment statement corresponding to the code statement is used to record execution of the code statement in the private variable in the method.

In step 304, for each method in the first source code stored in the memory of the first test device, for ease of description, the method is referred to as a target method. A private variable in the target method and an assignment statement corresponding to each code statement included in the target method may be added to the target method by performing the following steps 3041 and 3042. Optionally, the first test device performs the following operations in 3041 and 3042 through the code coverage unit.

3041: Declare the private variable in the target method before a first code statement in the target method, where the private variable in the target method includes an element corresponding to each code statement in the target method.

For each code statement in the target method, the element corresponding to the code statement in the private variable is used to record execution of the code statement, that is, the element corresponding to the code statement is used to record whether the code statement is executed.

In some embodiments, the declared private variable includes that a value of each element is a default value. If the value of the element corresponding to the code statement is a default value, it indicates that the code statement has not been executed.

In some embodiments, a quantity of elements included in the declared private variable is equal to a quantity of code statements included in the target method; or a quantity of elements included in the declared private variable is equal to a quantity of code statements included in a first target class to which the target method belongs.

A data type of the private variable in the target method may be an integer, a character, Boolean, or the like. The private variable in the target method may be an array, a linked list, a graph, or the like.

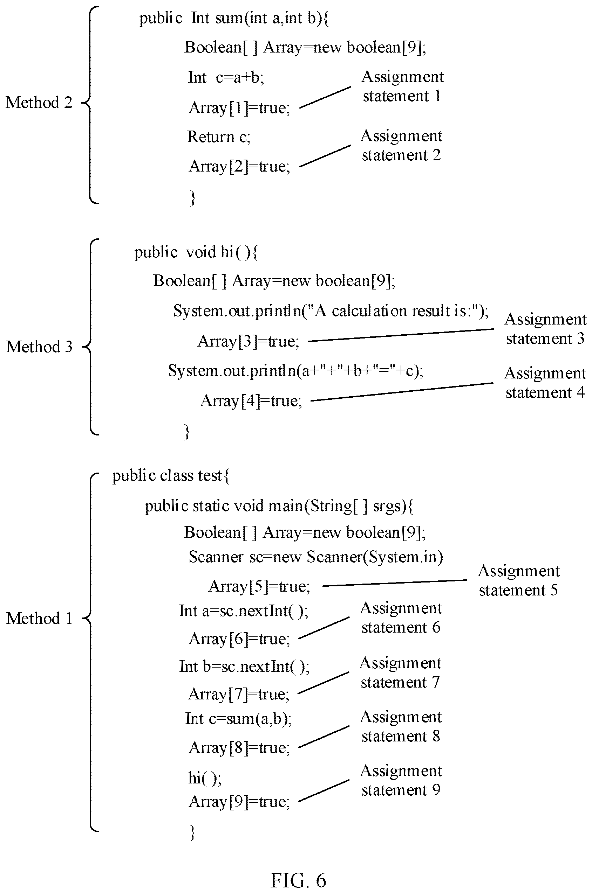

For a class in the first source code shown in FIG. 5, the class includes the method 1, the method 2, and the method 3, and includes nine code statements in total. For the method 2 in the first source code, a private variable in the method 2 added to the method 2 is a Boolean array (Array). As shown in FIG. 6, a length of the private variable Array is 9, that is, the private variable Array includes nine elements. The method 2 includes two code statements, and two elements in the nine elements included in the private variable Array are elements corresponding to the two code statements.

For the method 3 in the first source code, a private variable in the method 3 added to the method 3 is also a Boolean array (Array). As shown in FIG. 6, a length of the private variable Array is 9, the method 3 includes two code statements, and two elements in the nine elements included in the private variable Array are elements corresponding to the two code statements.

For the method 1 in the first source code, a private variable in the method 1 added to the method 1 is also a Boolean array (Array). As shown in FIG. 6, a length of the private variable Array is 9, the method 1 includes five code statements, and five elements in the nine elements included in the private variable Array are elements corresponding to the five code statements.

3042: Add, to the target method, an assignment statement corresponding to an i^{th} code statement, where i=1, 2, 3, ..., the assignment statement is used to set, when the i^{th} code statement is executed, a value of an element corresponding to the i^{th} code statement to a target value, and the target value indicates that the i^{th} code statement is executed.

In some embodiments, an assignment statement is added after the i^{th} code statement in the target method, and the assignment statement is located between the i^{th} code statement and an (i+1)^{th} code statement.

In some embodiments, when the data type of the private variable in the target method is an integer, the default value and the target value are two integer values. For example, the default value is 0, and the target value is 1; or the default value is 1, and the target value is 0. Alternatively,
when the data type of the private variable in the target method is a character, the default value and the target value are two characters. For example, the default value is a, and the target value is b; or the default value is c, and the target value is d. Alternatively,
when the data type of the private variable in the target method is Boolean, the default value and the target value are two Boolean values. For example, the default value is false, and the target value is true; or the default value is true, and the target value is false.

In some embodiments, the assignment statement is used to set a value of a j^{th} element of the private variable in the target method to a target value, where j is obtained based on the i^{th} code statement, and the j^{th} element is an element corresponding to the i^{th} code statement.

In some embodiments, a quantity of elements included in the private variable in the target method is equal to a quantity of code statements included in the target method, and i=j. That is, the element corresponding to the i^{th} code statement in the target method is an i^{th} element of the private variable in the target method.

In some embodiments, a quantity of elements included in the private variable in the target method is equal to a quantity of code statements included in a first target class to which the target method belongs, and j is determined based on i, a ranking of the target method in the first target class, and identification information of a start code statement and identification information of an end code statement in the target method. j is an actual sequence number of the i^{th} code statement in the target method in the first target class. In other words, the i^{th} code statement in the target method is actually a j^{th} code statement in the first target class, and the element corresponding to the i^{th} code statement in the target method is the j^{th} element of the private variable in the target method.

In some embodiments, each method included in the first target class is stored in a same storage area in the memory of the first test device, but methods included in the first target class are stored out of order in the storage area. The i^{th} code statement in the target method is actually the j^{th} code statement stored in the storage area, and the element corresponding to the i^{th} code statement in the target method is the j^{th} element of the private variable in the target method.

For example, as shown in FIG. 5, the three methods included in the first target class are stored in the same storage area in the memory of the first test device, and the storage sequence of the three methods in the storage area is: the method 2, the method 3, and the method 1. The method 2 includes two code statements. As shown in FIG. 6, the first code statement is the first code statement stored in the storage area. An assignment statement 1 is added after the first code statement, and the assignment statement 1 is used to set, to a target value "true", a value of a first element included in the private variable in the method 2. The second code statement is the second code statement stored in the storage area. An assignment statement 2 is added after the second code statement, and the assignment statement 2 is used to set, to a target value "true", a value of a second element included in the private variable in the method 2.

Still as shown in FIG. 6, the method 3 includes two code statements. The first code statement is the third code statement stored in the storage area. An assignment statement 3 is added after the first code statement, and the assignment statement 3 is used to set, to a target value "true", a value of a third element included in the private variable in the method 3. The second code statement is the fourth code statement stored in the storage area. An assignment statement 4 is added after the second code statement, and the assignment statement 4 is used to set, to a target value "true", a value of a fourth element included in the private variable in the method 3.

Further, as shown in FIG. 6, the method 1 includes five code statements. The i^{th} code statement is an (i+4)^{th} code statement stored in the storage area, that is, j=i+4, where i=1, 2, 3, 4, 5. An assignment statement is added after the ith code statement, and the assignment statement is used to set, to a target value "true", a value of an (i+4)^{th} element included in the private variable in the method 1.

For any code statement in the first source code, when the code statement is executed, an assignment statement preceded by the code statement is also executed.

In some embodiments, because the first test device immediately adds the private variable to the at least one first method when receiving the code coverage request, time at which the first test device receives the code coverage request is basically the same as time at which the first test device starts to add the private variable to the at least one first method.

In some embodiments, when the first test device receives the code coverage request (or adds the private variable to the at least one first method), the first test device is executing a second method in the first source code, to obtain thread stack frame information of the second method. The thread stack frame information is used to record execution of each code statement in the second method. A code statement that is executed in the second method is determined based on the thread stack frame information.

When executing the second method, the first test device records the thread stack frame information of the second method. Optionally, the thread stack frame information includes identification information of the code statement that is executed in the second method and/or identification information of a code statement that is not executed in the second method. After the first test device completes execution of the second method, the first test device obtains the thread stack frame information of the second method, and determines, based on the thread stack frame information, the code statement that is executed in the second method.

In some embodiments, when the first test device receives the code coverage request (or adds the private variable to the at least one first method), the first test device has executed one or more static code blocks in the first source code. For ease of description, the static code block that has been executed by the first test device is referred to as a first static code block. When executing the first static code block, the first test device executes each code statement in the first static code block. In this way, when receiving the code coverage request, the first test device determines that each code statement in the first static code block is executed.

In some embodiments, when the first test device receives the code coverage request (or adds the private variable to the at least one first method), the first test device has executed one or more classes in the first source code, where a part of the one or more classes may include one constructor, and a part of classes may include a plurality of constructors. For ease of description, a class including one constructor is referred to as a second target class. When executing the second target class, the first test device executes each code statement in the constructor included in the second target class. In this way, when receiving the code coverage request, the first test device determines that each code statement included in the constructor in the second target class is executed.

For a class including a plurality of constructors, when executing the class, the first test device may execute some constructors in the class. Therefore, for an executed class including the plurality of constructors, the first test device cannot determine which constructors in the class are executed.

In some embodiments, after loading the first source code to the at least one test device, the pipeline device further sends the at least one test case to the test management device, and the test management device receives the at least one test case. Then, the test management device may schedule the at least one test device, and send a first test case to the at least one test device, where the at least one test device tests the first source code by using the first test case, and the at least one test case includes the first test case.

In some embodiments, after loading the first source code to the at least one test device, the pipeline device sends a first test case to the at least one test device. The at least one test device tests the first source code by using the first test case, and the at least one test case includes the first test case.

In the process of step 301 to step 304, the code coverage device subscribes to the test service on the pipeline device, the pipeline device notifies the code coverage device when starting the test on the first source code by using the test service, and the code coverage device sends the code coverage request to the at least one test device. After receiving the code coverage request, the first test device adds the private variable to the method included in the first source code. Optionally, the process takes short time, and the process may be completed before the first test device receives the first test case. In other words, when receiving the first test case and testing the first source code by using the first test case, the first test device has performed step 304. Alternatively, the process may be completed only after the first test device receives the first test case. However, because the process takes short time, the first test device has completed step 304 within short time for starting to test the first source code by using the first test case.

Step 305: When completing the test on the first source code by using the first test case, the first test device obtains first code coverage information based on the private variable in the at least one first method, where the first code coverage information describes a code statement that is executed in the at least one first method.

In step 305, the first test device determines a code statement that is executed and/or a code statement that is not executed in each first method based on a value of each element included in a private variable in each first method, and obtains the first code coverage information based on the code statement that is executed and/or the code statement that is not executed in each first method.

For each first method and each code statement in the first method, a value of an element corresponding to the code statement is obtained from the private variable in the first method. If the value of the element corresponding to the code statement is a target value, it indicates that the code statement is executed; or if the value of the element corresponding to the code statement is a default value, it indicates that the code statement is not executed.

In some embodiments, the first code coverage information includes identification information of the code statement in the first source code that is executed and/or identification information of the code statement that is not executed in the first source code.

In some embodiments, a quantity of elements included in the private variable in the first method is equal to a quantity of code statements included in the first method, and an element corresponding to an i^{th} code statement in the first method is an i^{th} element of the private variable in the first method.

In some embodiments, a quantity of elements included in the private variable in the first method is equal to a quantity of code statements included in a first target class to which the first method belongs, an actual sequence number of an i^{th} code statement in the first method in the first target class is j, the i^{th} code statement in the first method is actually a j^{th} code statement in the first target class, and an element corresponding to the i^{th} code statement in the first method is a j^{th} element of the private variable in the first method. In this case, the value of each element included in the private variable in each first method is obtained; and the first code coverage information is obtained based on the value of each element included in the private variable in each first method. Optionally, during implementation,
each first method in the first target class is obtained based on the first correspondence in the index file and identification information of the first target class. Code coverage information corresponding to the first target class is obtained based on a value of each element included in a private variable in each first method in the first target class. In the foregoing manner, code coverage information corresponding to classes in the first source code is obtained, and the code coverage information corresponding to the classes in the first source code constitutes the first code coverage information.

In some embodiments, a quantity of elements included in the private variable in the first method is equal to a quantity of code statements included in a first target class to which the first method belongs. For a storage area that is in the memory of the first test device and that is used to store each method included in the first target class, an i^{th} code statement in the first method is a j^{th} code statement stored in the storage area, and an element corresponding to the i^{th} code statement in the first method is a j^{th} element of the private variable in the first method. In this case, the value of each element included in the private variable in each first method is obtained; and the first code coverage information is obtained based on the value of each element included in the private variable in each first method, the ranking of each first method, and the identification information of the start code statement and the identification information of the end code statement in each first method. Optionally, during implementation,

Identification information of each first method in the first target class is obtained based on the first correspondence in the index file and identification information of the first target class. The ranking of each first method in the first target class and the identification information of the start code statement and the identification information of the end code statement in each first method in the first target class are obtained based on the second correspondence in the index file and the identification information of each first method in the first target class. Code coverage information corresponding to the first target class is obtained based on the value of each element included in the private variable in each first method in the first target class, the ranking of each first method in the first target class, and the identification information of the start code statement and the identification information of the end code statement in each first method in the first target class. In the foregoing manner, code coverage information corresponding to classes in the first source code is obtained, and the code coverage information corresponding to the classes in the first source code constitutes the first code coverage information.

In some embodiments, the first code coverage information further describes a code statement that is executed in a second method; and/or the first code coverage information further describes each code statement in the first static code block; and/or the first code coverage information further describes each code statement in the constructor of the second target class.

Step 306: The first test device sends the first code coverage information to the code coverage device.

In some embodiments, the at least one test device includes one test device. The test device is the first test device, the first test device tests the entire first source code by using the first test case, the first code coverage information is overall code coverage information corresponding to the first source code, and the first code coverage information is also overall code coverage information corresponding to the first test case.

In some embodiments, the at least one test device includes a plurality of test devices. Each of the plurality of test devices tests a part of content in the first source code, that is, the first test device tests a part of content in the first source code. The first code coverage information describes a code statement that is executed in the part of content. Similar to the first test device, another test device also obtains code coverage information corresponding to a part of content tested by the another test device. For example, a second test device obtains second code coverage information, where the second code coverage information describes a code statement that is executed in a part of content tested by the second test device; and sends the second code coverage information to the code coverage device. Both the first code coverage information and the second code coverage information are code coverage information corresponding to the first test case.

In some embodiments, after the test on the first source code is completed by using the first test case, the pipeline device may further send a second test case to the at least one test device, or the test management device may send a second test case to the at least one test device. The second test case is a test case other than the first test case in the at least one test case.

That is, when receiving the second test case, the first test device tests the first source code by using the second test case, in other words, executes the first source code by using the second test case. When the test on the first source code is completed by using the second test case, third code coverage information is obtained based on the private variable in each method included in the first source code, where the third code coverage information describes a code statement that is executed in the first source code; and the third code coverage information is sent to the code coverage device.

Step 307: The code coverage device receives the first code coverage information, and displays a first code coverage result based on the first code coverage information, where the first code coverage result includes code coverage of the first source code.

If the at least one test device includes a plurality of test devices, the first test device tests a part of content in the first source code, and the first code coverage information describes a code statement that is executed in the part of content. The code coverage device receives code coverage information sent by the plurality of test devices, and obtains, based on the code coverage information sent by the plurality of test devices, the overall code coverage information corresponding to the first source code. If the at least one test device includes one test device, and the one test device is the first test device, the first test device tests the entire first source code, and the first code coverage information sent by the first test device is the overall code coverage information corresponding to the first source code.

The code coverage device displays the first code coverage result based on the overall code coverage information, where the first code coverage result includes the code coverage of the first source code.

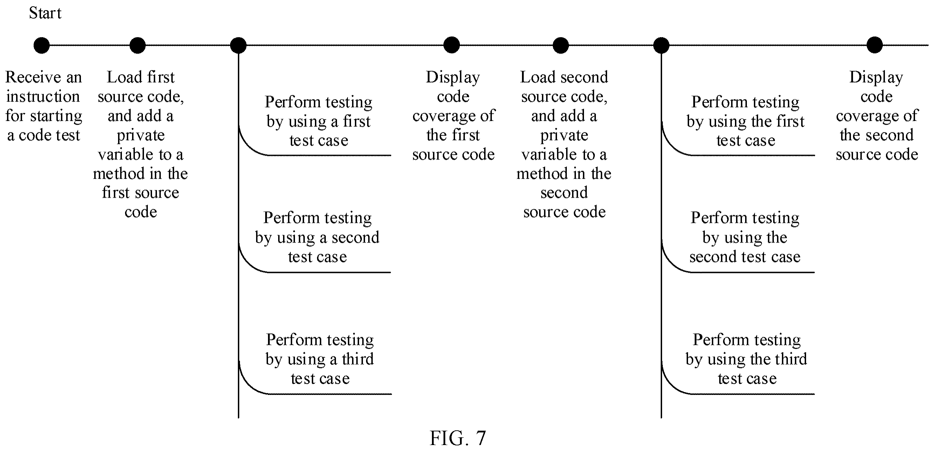

As shown in FIG. 7, for other source code in the code repository, after the test on the first source code is completed by using the at least one test device, the pipeline platform obtains the second source code from the other source code in the code repository, loads the second source code to the at least one test device, and tests the second source code by using the at least one test device. In this way, source code in the code repository can be tested one by one, to constitute a pipeline test mode.

In some embodiments, the code coverage device further obtains, based on the change information and the overall code coverage information, code coverage information corresponding to the difference part between second source code and first source code. The first source code and the second source code are source code of two versions of the first service, and the version of the second source code is earlier than the version of the first source code. A code coverage result of the difference part is displayed based on the code coverage information corresponding to the difference part, where the code coverage result of the difference part includes code coverage of the difference part.

The change information is change information included in the pipeline details of the first source code. The pipeline details of the first source code further include the storage address of the first source code in the code repository. In this way, the code coverage device obtains the first source code from the code repository based on the storage address of the first source code. Identification information of a start code statement and identification information of an end code statement of the difference part are obtained based on the change information and the first source code.

The code coverage information corresponding to the difference part between the second source code and the first source code is obtained based on the overall code coverage information corresponding to the first source code, and the identification information of the start code statement and the identification information of the end code statement of the difference part. A code coverage result of the difference part is displayed based on the code coverage information corresponding to the difference part, where the code coverage result of the difference part includes code coverage of the difference part.

In some embodiments, the code coverage device may display the code coverage information corresponding to the difference part between the second source code and the first source code, and/or the overall code coverage information corresponding to the first source code.

In some embodiments, the code coverage device obtains the difference part based on the change information and the first source code. At least one constituent part included in the difference part is obtained. Code coverage information corresponding to each constituent part is obtained based on the code coverage information corresponding to the difference part, where the code coverage information corresponding to the constituent part describes a code statement that is executed in the constituent part. A code coverage result of each constituent part is displayed based on the code coverage information corresponding to the constituent part, where the code coverage result of the constituent part includes code coverage of the constituent part.

Optionally, an abstract syntax tree (abstract syntax tree, AST) of the difference part is generated based on the difference part. The at least one constituent part included in the difference part is obtained based on the AST of the difference part.

The at least one constituent part includes one or more of the following: at least one branch in the difference part, at least one method in the difference part, or at least one class in the difference part.

In some embodiments, the code coverage device may display the code coverage information corresponding to each constituent part.

In some embodiments, the code coverage device obtains at least one constituent part included in the first source code. Code coverage information corresponding to each constituent part included in the first source code is obtained based on the overall code coverage information, and a code coverage result of each constituent part included in the first source code is displayed based on the code coverage information corresponding to each constituent part included in the first source code.

In some embodiments, the overall code coverage information corresponding to the first source code is overall code coverage information corresponding to the first test case. The at least one test device further sends code coverage information corresponding to the second test case to the code coverage device. In other words, the code coverage device further continues to obtain the overall code coverage information corresponding to the second test case. The code coverage device may obtain overall code coverage information corresponding to different test cases.

In some embodiments, when the code coverage information includes the identification information of the at least one test case, the at least one test device sends, based on identification information of each of the at least one test case, the code coverage information corresponding to each test case to the code coverage device. A second code coverage result is displayed based on the code coverage information corresponding to each test case, where the second code coverage result includes code coverage obtained when the first source code is executed by using each test case.

In some embodiments, the code coverage information may be displayed at a granularity of a test case, in other words, the overall code coverage information corresponding to different test cases may be displayed.

The first source code is source code of the first service. The overall code coverage information corresponding to the first source code may also be referred to as overall code coverage information corresponding to the first service.

The code repository may further include source code of another service, and overall code coverage information corresponding to the another service may be obtained by using the process of step 301 to step 307.

A plurality of services in the code repository may be grouped into at least one service group, and each service group includes one or more services. For each service group, after overall code coverage information corresponding to each service in the service group is obtained, overall code coverage information corresponding to the service group is obtained based on the overall code coverage information corresponding to each service in the service group. Code coverage corresponding to the service group is displayed based on the overall code coverage information corresponding to the service group. Optionally, the overall code coverage information corresponding to the service group may be displayed.

A service in the at least one service group may belong to one cloud service. Optionally, each service in the at least one service group is a microservice in the cloud service. Overall code coverage information corresponding to the cloud service is obtained based on the overall code coverage information corresponding to each service group in the cloud service. Code coverage corresponding to the cloud service is displayed based on the overall code coverage information corresponding to the cloud service. Optionally, the overall code coverage information corresponding to the cloud service may be displayed.

The code coverage device displays the code coverage or the code coverage information at different granularities. In this way, display requirements of the user for different granularities can be met.

In this embodiment of this application, after the pipeline device loads the first source code to the memory of the first test device, the first test device receives the code coverage request sent by the code coverage device. The private variable is added, based on the code coverage request, to the method included in the first source code, where the private variable includes the element corresponding to each code statement in the method. For each code statement in the method, the assignment statement is added after the code statement, the assignment statement is used to set, when the code statement is executed, the value of the element corresponding to the code statement to the target value, and the target value indicates that the code statement is executed. After the test on the first source code is completed, the first code coverage information may be obtained based on the private variable in each method in the first source code. In this way, after the first source code is started on the first test device, the variable and the assignment statement may be added to the first source code, and the variable and the assignment statement do not need to be added when the first source code is loaded to the first test device. In this way, there is no need to modify the command for starting the test on the first source code, and the user may not perceive a process of obtaining the code coverage information, to automatically obtain the code coverage information. This reduces labor costs, reduces costs of maintaining a code test platform, and improves flexibility of using the automated code test platform by the user.

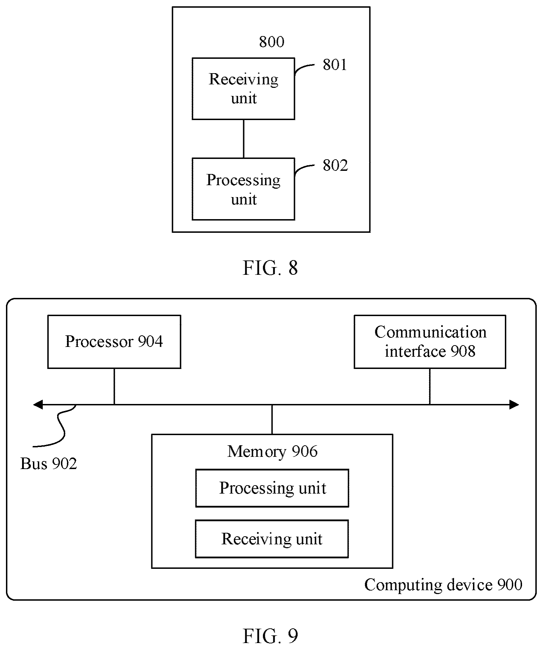

As shown in FIG. 8, an embodiment of this application provides a source code processing apparatus 800. The apparatus 800 is deployed on the code test platform 100 shown in FIG. 1 or FIG. 2, or the apparatus 800 is deployed on the code test platform to which the method 300 shown in FIG. 3 is applied. The apparatus 800 is configured to test first source code by using a first test case. The apparatus 800 includes:
a receiving unit 801, configured to receive an instruction for starting a code test, where the instruction for starting the code test instructs the apparatus 800 to start a test on the first source code; and
a processing unit 802, configured to add a private variable to at least one first method included in the first source code, where the at least one first method is a method that is not executed in the first source code, and the private variable in the first method is used to record execution of each code statement in the first method when the first method is executed.

The processing unit 802 is further configured to: when the test on the first source code is completed by using the first test case, obtain first code coverage information based on the private variable in the at least one first method, where the first code coverage information describes execution of a code statement in the at least one first method.

The processing unit 802 is further configured to display a first code coverage result based on the first code coverage information, where the first code coverage result includes code coverage of the first source code.

Optionally, for a detailed implementation process in which the receiving unit 801 receives the instruction for starting the code test, refer to related content of step 301 in the method 300 shown in FIG. 3. Details are not described herein again.

Optionally, for a detailed implementation process in which the processing unit 802 adds the private variable to the at least one first method included in the first source code, refer to related content of step 304 in the method 300 shown in FIG. 3. Details are not described herein again.

Optionally, for a detailed implementation process in which the processing unit 802 obtains the first code coverage information based on the private variable in the at least one first method, refer to related content of step 305 in the method 300 shown in FIG. 3. Details are not described herein again.

Optionally, for a detailed implementation process in which the processing unit 802 obtains the first code coverage information based on the private variable in the at least one first method, refer to related content of step 307 in the method 300 shown in FIG. 3. Details are not described herein again.

Optionally, the first source code further includes a second method, the second method is a method that is being executed when the private variable is added to the at least one first method, and the processing unit 802 is further configured to:
obtain thread stack frame information of the second method, where the thread stack frame information is used to record execution of each code statement in the second method; and
determine, based on the thread stack frame information, a code statement that is executed in the second method, where the first code coverage information further describes execution of a code statement in the second method.

Optionally, for a detailed implementation process in which the processing unit 802 obtains the thread stack frame information of the second method, refer to related content of step 3042 in the method 300 shown in FIG. 3. Details are not described herein again.

Optionally, for a detailed implementation process in which the processing unit 802 determines, based on the thread stack frame information, the code statement that is executed in the second method, refer to related content of step 3042 in the method 300 shown in FIG. 3. Details are not described herein again.

Optionally, the first code coverage information further describes execution of each code statement in a first static code block, the first static code block is a static code block that has been executed in the first source code before the private variable is added to the at least one first method, and each code statement in the first static code block is executed.

Optionally, the first code coverage information further describes execution of each code statement in a constructor of a target class, the target class is a class that includes one constructor and that has been executed in the first source code before the private variable is added to the at least one first method, and each code statement in the constructor of the target class is executed.

Optionally, the private variable in the first method includes an element corresponding to each code statement in the first method, and the processing unit 802 is further configured to:
add an assignment statement corresponding to an i^{th} code statement in the first method, where i=1, 2, 3, ..., the assignment statement is used to set, when the i^{th} code statement is executed, a value of an element corresponding to the i^{th} code statement to a target value, and the target value indicates that the i^{th} code statement is executed.

Optionally, for a detailed implementation process in which the processing unit 802 adds the assignment statement corresponding to the i^{th} code statement in the first method, refer to related content of step 3042 in the method 300 shown in FIG. 3. Details are not described herein again.

Optionally, the first code coverage information includes identification information of a code statement that is executed in the at least one first method, and the processing unit 802 is configured to:
obtain a ranking of each first method in the first source code and identification information of a start code statement and identification information of an end code statement in each first method; and
obtain a value of each element included in a private variable in each first method; and
obtain the first code coverage information based on the value of each element included in the private variable in each first method, the ranking of each first method, and the identification information of the start code statement and the identification information of the end code statement in each first method.

Optionally, for a detailed implementation process in which the processing unit 802 obtains the ranking of each first method in the first source code and the identification information of the start code statement and the identification information of the end code statement in each first method, refer to related content of step 305 in the method 300 shown in FIG. 3. Details are not described herein again.

Optionally, for a detailed implementation process in which the processing unit 802 obtains the value of each element included in the private variable in each first method, refer to related content of step 305 in the method 300 shown in FIG. 3. Details are not described herein again.

Optionally, for a detailed implementation process in which the processing unit 802 obtains the first code coverage information, refer to related content of step 305 in the method 300 shown in FIG. 3. Details are not described herein again.

Optionally, the apparatus 800 further includes a first test device and a second test device, the first source code includes a first part and a second part, the first test device is configured to test the first part by using the first test case, the second test device is configured to test the second part by using the first test case, the first code coverage information describes execution of a code statement in the first part, and the processing unit 802 is further configured to:
add a second private variable to at least one third method included in the first source code in the second test device, where the at least one third method is a method that is not executed in the first source code in the second test device;
when the second test device completes the test on the first source code by using the first test case, obtain second code coverage information based on a private variable in a third method included in the second part, where the second code coverage information describes execution of a code statement in the second part;
obtain, based on the first code coverage information and the second code coverage information, overall code coverage information corresponding to the first source code; and
display the first code coverage result based on the overall code coverage information.

Optionally, for a detailed implementation process in which the processing unit 802 adds the second private variable to the at least one third method included in the first source code in the second test device, refer to related content of step 304 in the method 300 shown in FIG. 3. Details are not described herein again.

Optionally, for a detailed implementation process in which the processing unit 802 obtains the second code coverage information, refer to related content of step 306 in the method 300 shown in FIG. 3. Details are not described herein again.

Optionally, for a detailed implementation process in which the processing unit 802 obtains the overall code coverage information corresponding to the first source code, refer to related content of step 307 in the method 300 shown in FIG. 3. Details are not described herein again.

Optionally, for a detailed implementation process in which the processing unit 802 displays the first code coverage result, refer to related content of step 307 in the method 300 shown in FIG. 3. Details are not described herein again.

Optionally, the processing unit 802 is further configured to add a private variable to a method other than the at least one first method in the first source code.

Optionally, the code coverage included in the first code coverage result is code coverage obtained when the first source code is executed by using the first test case, the apparatus 800 is further configured to test the first source code by using a second test case after the test on the first source code is completed by using the first test case, and the processing unit 802 is further configured to:
when the test on the first source code is completed by using the second test case, obtain third code coverage information based on a private variable in each method included in the first source code, where the third code coverage information describes execution of a code statement in the first source code; and
display a second code coverage result based on the first code coverage information and the third code coverage information, where the second code coverage result includes code coverage obtained when the first source code is executed by using the first test case and the second test case.

Optionally, for a detailed implementation process in which the processing unit 802 obtains the third code coverage information, refer to related content of step 307 in the method 300 shown in FIG. 3. Details are not described herein again.

Optionally, for a detailed implementation process in which the processing unit 802 displays the second code coverage result, refer to related content of step 307 in the method 300 shown in FIG. 3. Details are not described herein again.

Optionally, the processing unit 802 is further configured to:
obtain change information, where the change information describes a difference part between second source code and the first source code, the first source code and the second source code are source code of two versions of a same service, and a version of the second source code is earlier than a version of the first source code;
obtain, based on the change information and the first code coverage information, code coverage information corresponding to the difference part, where the code coverage information corresponding to the difference part describes execution of a code statement in the difference part; and

A code coverage result of the difference part is displayed based on the code coverage information corresponding to the difference part, where the code coverage result of the difference part includes code coverage of the difference part.

Optionally, for a detailed implementation process in which the processing unit 802 obtains the change information, refer to related content of step 307 in the method 300 shown in FIG. 3. Details are not described herein again.

Optionally, for a detailed implementation process in which the processing unit 802 obtains the code coverage information corresponding to the difference part, refer to related content of step 307 in the method 300 shown in FIG. 3. Details are not described herein again.

Optionally, for a detailed implementation process in which the processing unit 802 displays the code coverage result of the difference part, refer to related content of step 307 in the method 300 shown in FIG. 3. Details are not described herein again.

Optionally, the processing unit 802 is further configured to:
obtain at least one constituent part included in the difference part;
for each constituent part, obtain, based on the code coverage information corresponding to the difference part, code coverage information corresponding to the constituent part, where the code coverage information corresponding to the constituent part describes execution of a code statement in the constituent part; and
display a code coverage result of the constituent part based on the code coverage information corresponding to the constituent part, where the code coverage result of the constituent part includes code coverage of the constituent part.

Optionally, for a detailed implementation process in which the processing unit 802 obtains the at least one constituent part included in the difference part, refer to related content of step 307 in the method 300 shown in FIG. 3. Details are not described herein again.

Optionally, for a detailed implementation process in which the processing unit 802 obtains the code coverage information corresponding to the constituent part, refer to related content of step 307 in the method 300 shown in FIG. 3. Details are not described herein again.

Optionally, for a detailed implementation process in which the processing unit 802 displays the code coverage result of the constituent part, refer to related content of step 307 in the method 300 shown in FIG. 3. Details are not described herein again.

Optionally, the at least one constituent part includes one or more of the following: at least one branch in the difference part, at least one method in the difference part, or at least one class in the difference part.

Both the processing unit 802 and the receiving unit 801 may be implemented by using software, or may be implemented by using hardware. For example, the following uses the processing unit 802 as an example to describe an implementation of the processing unit 802. Similarly, for an implementation of the receiving unit 801, refer to the implementation of the processing unit 802.

The unit is used as an example of a software functional unit, and the processing unit 802 may include code running on a computing instance. The computing instance may include at least one of a physical host (a computing device), a virtual machine, and a container. Further, there may be one or more computing instances. For example, the processing unit 802 may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. VPCs are interconnected through the communication gateway.

The unit is used as an example of a hardware functional unit, and the processing unit 802 may include at least one computing device like a server. Alternatively, the processing unit 802 may be implemented via an application-specific integrated circuit (application-specific integrated circuit, ASIC), a device implemented via a programmable logic device (programmable logic device, PLD), or the like. The PLD may be a complex programmable logic device (complex programmable logic device, CPLD), a field-programmable gate array (field-programmable gate array, FPGA), generic array logic (generic array logic, GAL), or any combination thereof.

A plurality of computing devices included in the processing unit 802 may be distributed in a same region, or may be distributed in different regions. The plurality of computing devices included in the processing unit 802 may be distributed in a same AZ, or may be distributed in different AZs. Similarly, the plurality of computing devices included in the processing unit 802 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the processing unit 802 may be configured to perform any step in the method provided in any one of the foregoing embodiments, and the receiving unit 801 may be configured to perform any receiving step in the method provided in any one of the foregoing embodiments. Steps that the processing unit 802 and the receiving unit 801 are responsible for implementing may be specified as required, and the processing unit 802 and the receiving unit 801 respectively implement different steps in the method provided in any one of the foregoing embodiments, to implement all functions of the source code processing apparatus 800.

In this embodiment of this application, when the receiving unit receives the instruction for starting the code test, the processing unit starts the test on the first source code. After starting the test on the first source code, the processing unit adds the private variable to the at least one first method that is not executed in the first source code. When the test on the first source code is completed by using the first test case, the processing unit obtains the first code coverage information based on the private variable in the at least one first method, and displays the code coverage of the first source code based on the first code coverage information. Only after the test on the first source code is started, the processing unit adds the private variable to the at least one first method that is not executed, and therefore there is no need to modify the instruction for starting the code test. After the test on the first source code is started, the private variable is automatically added to the method that is not executed in the first source code, and the user does not perceive an entire process of obtaining the first code coverage information. In this way, the code coverage is automatically obtained. This reduces costs, reduces costs of maintaining the code test platform, and improves flexibility of using the automated code test platform by the user.

With reference to FIG. 9, an embodiment of this application provides a computing device 900. For example, the computing device 900 may be the device in the code test platform 100 shown in FIG. 1 or FIG. 2, or the computing device in the code test platform to which the method 300 shown in FIG. 3 is applied.

As shown in FIG. 9, the computing device 900 includes a bus 902, a processor 904, a memory 906, and a communication interface 908. The processor 904, the memory 906, and the communication interface 908 communicate with each other through the bus 902. The computing device 900 may be a server or a terminal device. It should be understood that a quantity of processors and a quantity of memories in the computing device 900 are not limited in this application.

The bus 902 may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one line is used in FIG. 9 for representation, but it does not indicate that there is only one bus or only one type of bus. The bus 902 may include a path for transmitting information between components (for example, the memory 906, the processor 904, and the communication interface 908) in the computing device 900.

The processor 904 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 906 may include a volatile memory (volatile memory), for example, a random access memory (random access memory, RAM). The processor 904 may further include a non-volatile memory (non-volatile memory), for example, a read-only memory (read-only memory, ROM), a flash memory, a hard disk drive (hard disk drive, HDD), or a solid-state drive (solid-state drive, SSD).

Refer to FIG. 9. The memory 906 stores executable program code, and the processor 904 executes the executable program code to separately implement functions of the receiving unit 801 and the processing unit 802 in the apparatus 800 shown in FIG. 8, to implement the method provided in any one of the foregoing embodiments. In other words, the memory 906 stores instructions for performing the method provided in any one of the foregoing embodiments. Alternatively,
the communication interface 908 uses a transceiver module, for example but not limited to, a network interface card or a transceiver, to implement communication between the computing device 900 and another device or a communication network.

An embodiment of this application further provides a source code processing cluster. The source code processing cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

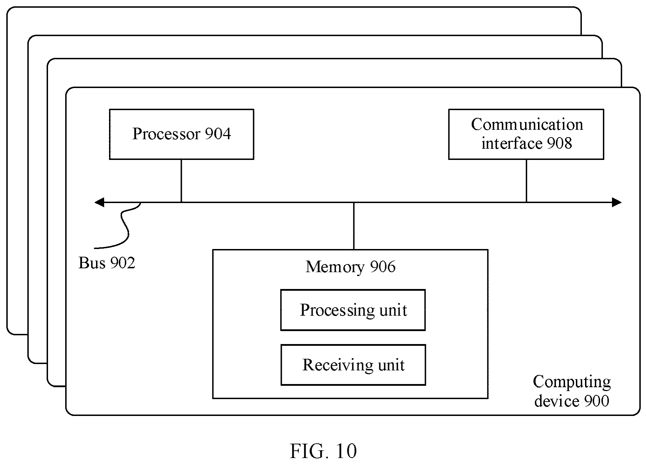

As shown in FIG. 10, the source code processing cluster includes at least one computing device 900. A memory 906 in one or more computing devices 900 in the source code processing cluster may store same instructions for performing the method provided in any one of the foregoing embodiments.

In some possible implementations, the memory 906 in the one or more computing devices 900 in the source code processing cluster may alternatively separately store a part of the instructions for performing the source code processing method. In other words, a combination of the one or more computing devices 900 may jointly execute instructions for performing the method provided in any one of the foregoing embodiments.

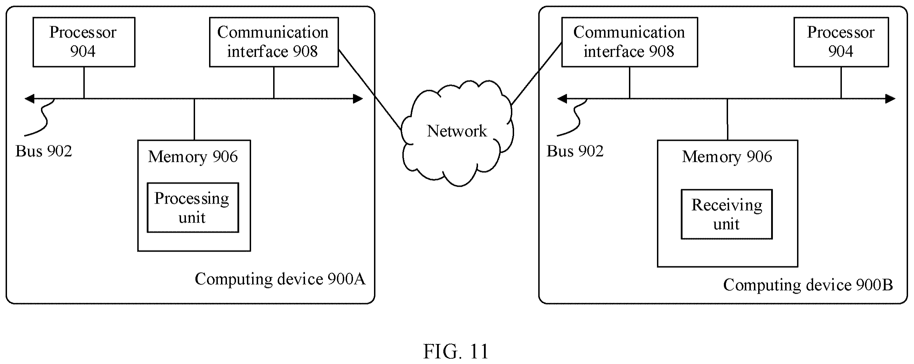

In some possible implementations, the one or more computing devices in the source code processing cluster may be connected through a network. The network may be a wide area network, a local area network, or the like. FIG. 11 shows a possible implementation. As shown in FIG. 11, two computing devices 900A and 900B are connected through a network. Specifically, each computing device is connected to the network through a communication interface in the computing device.

In this possible implementation, a memory 906 in the computing device 900A stores instructions for performing a function of the processing unit 802 in the embodiment shown in FIG. 8. In addition, a memory 906 in the computing device 900B stores instructions for performing a function of the receiving unit 801 in the embodiment shown in FIG. 8.

It should be understood that functions of the computing device 900A shown in FIG. 11 may alternatively be completed by a plurality of computing devices 900. Similarly, functions of the computing device 900B may alternatively be completed by a plurality of computing devices 900.

An embodiment of this application further provides another source code processing cluster. A connection relationship between computing devices in the source code processing cluster may be similar to a connection manner of the source code processing cluster in FIG. 11. A difference lies in that a memory 906 in one or more computing devices 900 in the source code processing cluster may store same instructions for performing the method provided in any one of the foregoing embodiments.

In some possible implementations, the memory 906 in the one or more computing devices 900 in the source code processing cluster may alternatively separately store a part of instructions for performing the method provided in any one of the foregoing embodiments. In other words, a combination of the one or more computing devices 900 may jointly execute instructions for performing the method provided in any one of the foregoing embodiments.

An embodiment of this application further provides a computer program product including instructions. The computer program product may be software or a program product that includes the instructions and that can be run on a computing device or stored in any usable medium. When the computer program product runs on at least one computing device, the at least one computing device is enabled to perform the method provided in any one of the foregoing embodiments.

An embodiment of this application further provides a computer-readable storage medium. The computer-readable storage medium may be any usable medium accessible by a computing device, or a data storage device, like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the method provided in any one of the foregoing embodiments.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, improvement, or the like made within the principle of this application should fall within the protection scope of this application.

## Claims

1. A source code processing method, wherein the method is applied to a code test platform, the code test platform is configured to test first source code by using a first test case, and the method comprises:
receiving an instruction for starting a code test, wherein the instruction for starting the code test instructs the code test platform to start a test on the first source code;
adding a private variable to at least one first method comprised in the first source code, wherein the at least one first method is a method that is not executed in the first source code, and the private variable in the first method is used to record execution of each code statement in the first method when the first method is executed;
when the test on the first source code is completed by using the first test case, obtaining first code coverage information based on the private variable in the at least one first method, wherein the first code coverage information describes execution of a code statement in the at least one first method; and
displaying a first code coverage result based on the first code coverage information, wherein the first code coverage result comprises code coverage of the first source code.

2. The method according to claim 1, wherein the first source code further comprises a second method, the second method is a method that is being executed when the private variable is added to the at least one first method, and the method further comprises:
obtaining thread stack frame information of the second method, wherein the thread stack frame information is used to record execution of each code statement in the second method; and
determining, based on the thread stack frame information, a code statement that is executed in the second method, wherein the first code coverage information further describes execution of a code statement in the second method.

3. The method according to claim 1 or 2, wherein the first code coverage information further describes execution of each code statement in a first static code block, the first static code block is a static code block that has been executed in the first source code before the private variable is added to the at least one first method, and each code statement in the first static code block is executed.

4. The method according to any one of claims 1 to 3, wherein the first code coverage information further describes execution of each code statement in a constructor of a target class, the target class is a class that comprises one constructor and that has been executed in the first source code before the private variable is added to the at least one first method, and each code statement in the constructor of the target class is executed.

5. The method according to any one of claims 1 to 4, wherein the private variable in the first method comprises an element corresponding to each code statement in the first method, and after the adding the private variable to the at least one first method comprised in the first source code, the method further comprises:
adding an assignment statement corresponding to an i^{th} code statement in the first method, wherein i=1, 2, 3, ..., the assignment statement is used to set, when the i^{th} code statement is executed, a value of an element corresponding to the i^{th} code statement to a target value, and the target value indicates that the i^{th} code statement is executed.

6. The method according to any one of claims 1 to 5, wherein the first code coverage information comprises identification information of a code statement that is executed in the at least one first method, and the method further comprises:
obtaining a ranking of each first method in the first source code and identification information of a start code statement and identification information of an end code statement in each first method; and
the obtaining the first code coverage information based on the private variable in the at least one first method comprises:
obtaining a value of each element comprised in a private variable in each first method; and
obtaining the first code coverage information based on the value of each element comprised in the private variable in each first method, the ranking of each first method, and the identification information of the start code statement and the identification information of the end code statement in each first method.

7. The method according to any one of claims 1 to 6, wherein the code test platform comprises a first test device and a second test device, the first source code comprises a first part and a second part, the first test device is configured to test the first part by using the first test case, the second test device is configured to test the second part by using the first test case, the first code coverage information describes execution of a code statement in the first part, and the method further comprises:
adding a second private variable to at least one third method comprised in the first source code in the second test device, wherein the at least one third method is a method that is not executed in the first source code in the second test device; and
when the second test device completes the test on the first source code by using the first test case, obtaining second code coverage information based on a private variable in a third method comprised in the second part, wherein the second code coverage information describes execution of a code statement in the second part; and
the displaying the first code coverage result based on the first code coverage information comprises:
obtaining, based on the first code coverage information and the second code coverage information, overall code coverage information corresponding to the first source code; and
displaying the first code coverage result based on the overall code coverage information.

8. The method according to any one of claims 1 to 7, wherein the method further comprises:
adding a private variable to a method other than the at least one first method in the first source code.

9. The method according to claim 8, wherein the code coverage comprised in the first code coverage result is code coverage obtained when the first source code is executed by using the first test case, the code test platform is further configured to test the first source code by using a second test case after the test on the first source code is completed by using the first test case, and the method further comprises:
when the test on the first source code is completed by using the second test case, obtaining third code coverage information based on a private variable in each method comprised in the first source code, wherein the third code coverage information describes execution of a code statement in the first source code; and
displaying a second code coverage result based on the first code coverage information and the third code coverage information, wherein the second code coverage result comprises code coverage obtained when the first source code is executed by using the first test case and the second test case.

10. The method according to any one of claims 1 to 9, wherein the method further comprises:
obtaining change information, wherein the change information describes a difference part between second source code and the first source code, the first source code and the second source code are source code of two versions of a same service, and a version of the second source code is earlier than a version of the first source code;
obtaining, based on the change information and the first code coverage information, code coverage information corresponding to the difference part, wherein the code coverage information corresponding to the difference part describes execution of a code statement in the difference part; and
displaying a code coverage result of the difference part based on the code coverage information corresponding to the difference part, wherein the code coverage result of the difference part comprises code coverage of the difference part.

11. The method according to claim 10, wherein the method further comprises:
obtaining at least one constituent part comprised in the difference part;
for each constituent part, obtaining, based on the code coverage information corresponding to the difference part, code coverage information corresponding to the constituent part, wherein the code coverage information corresponding to the constituent part describes execution of a code statement in the constituent part; and
displaying a code coverage result of the constituent part based on the code coverage information corresponding to the constituent part, wherein the code coverage result of the constituent part comprises code coverage of the constituent part.

12. The method according to claim 11, wherein the at least one constituent part comprises one or more of the following: at least one branch in the difference part, at least one method in the difference part, or at least one class in the difference part.

13. A source code processing apparatus, wherein the apparatus is configured to test first source code by using a first test case, and the apparatus comprises:
a receiving unit, configured to receive an instruction for starting a code test, wherein the instruction for starting the code test instructs the apparatus to start a test on the first source code; and
a processing unit, configured to add a private variable to at least one first method comprised in the first source code, wherein the at least one first method is a method that is not executed in the first source code, and the private variable in the first method is used to record execution of each code statement in the first method when the first method is executed, wherein
the processing unit is further configured to: when the test on the first source code is completed by using the first test case, obtain first code coverage information based on the private variable in the at least one first method, wherein the first code coverage information describes execution of a code statement in the at least one first method; and
the processing unit is further configured to display a first code coverage result based on the first code coverage information, wherein the first code coverage result comprises code coverage of the first source code.

14. The apparatus according to claim 13, wherein the first source code further comprises a second method, the second method is a method that is being executed when the private variable is added to the at least one first method, and the processing unit is further configured to:
obtain thread stack frame information of the second method, wherein the thread stack frame information is used to record execution of each code statement in the second method; and
determine, based on the thread stack frame information, a code statement that is executed in the second method, wherein the first code coverage information further describes execution of a code statement in the second method.

15. The apparatus according to claim 13 or 14, wherein the first code coverage information further describes execution of each code statement in a first static code block, the first static code block is a static code block that has been executed in the first source code before the private variable is added to the at least one first method, and each code statement in the first static code block is executed.

16. The apparatus according to any one of claims 13 to 15, wherein the first code coverage information further describes execution of each code statement in a constructor of a target class, the target class is a class that comprises one constructor and that has been executed in the first source code before the private variable is added to the at least one first method, and each code statement in the constructor of the target class is executed.

17. The apparatus according to any one of claims 13 to 16, wherein the private variable in the first method comprises an element corresponding to each code statement in the first method, and the processing unit is further configured to:
add an assignment statement corresponding to an i^{th} code statement in the first method, wherein i=1, 2, 3, ..., the assignment statement is used to set, when the i^{th} code statement is executed, a value of an element corresponding to the i^{th} code statement to a target value, and the target value indicates that the i^{th} code statement is executed.

18. The apparatus according to any one of claims 13 to 17, wherein the first code coverage information comprises identification information of a code statement that is executed in the at least one first method, and the processing unit is configured to:
obtain a ranking of each first method in the first source code and identification information of a start code statement and identification information of an end code statement in each first method;
obtain a value of each element comprised in a private variable in each first method; and
obtain the first code coverage information based on the value of each element comprised in the private variable in each first method, the ranking of each first method, and the identification information of the start code statement and the identification information of the end code statement in each first method.

19. The apparatus according to any one of claims 13 to 18, wherein the apparatus further comprises a first test device and a second test device, the first source code comprises a first part and a second part, the first test device is configured to test the first part by using the first test case, the second test device is configured to test the second part by using the first test case, the first code coverage information describes execution of a code statement in the first part, and the processing unit is further configured to:
add a second private variable to at least one third method comprised in the first source code in the second test device, wherein the at least one third method is a method that is not executed in the first source code in the second test device;
when the second test device completes the test on the first source code by using the first test case, obtain second code coverage information based on a private variable in a third method comprised in the second part, wherein the second code coverage information describes execution of a code statement in the second part;
obtain, based on the first code coverage information and the second code coverage information, overall code coverage information corresponding to the first source code; and
display the first code coverage result based on the overall code coverage information.

20. The apparatus according to any one of claims 13 to 19, wherein the processing unit is further configured to add a private variable to a method other than the at least one first method in the first source code.

21. The apparatus according to claim 20, wherein the code coverage comprised in the first code coverage result is code coverage obtained when the first source code is executed by using the first test case, the apparatus is further configured to test the first source code by using a second test case after the test on the first source code is completed by using the first test case, and the processing unit is further configured to:
when the test on the first source code is completed by using the second test case, obtain third code coverage information based on a private variable in each method comprised in the first source code, wherein the third code coverage information describes execution of a code statement in the first source code; and
display a second code coverage result based on the first code coverage information and the third code coverage information, wherein the second code coverage result comprises code coverage obtained when the first source code is executed by using the first test case and the second test case.

22. The apparatus according to any one of claims 13 to 21, wherein the processing unit is further configured to:
obtain change information, wherein the change information describes a difference part between second source code and the first source code, the first source code and the second source code are source code of two versions of a same service, and a version of the second source code is earlier than a version of the first source code;
obtain, based on the change information and the first code coverage information, code coverage information corresponding to the difference part, wherein the code coverage information corresponding to the difference part describes execution of a code statement in the difference part; and
display a code coverage result of the difference part based on the code coverage information corresponding to the difference part, wherein the code coverage result of the difference part comprises code coverage of the difference part.

23. The apparatus according to claim 22, wherein the processing unit is further configured to:
obtain at least one constituent part comprised in the difference part;
for each constituent part, obtain, based on the code coverage information corresponding to the difference part, code coverage information corresponding to the constituent part, wherein the code coverage information corresponding to the constituent part describes execution of a code statement in the constituent part; and
display a code coverage result of the constituent part based on the code coverage information corresponding to the constituent part, wherein the code coverage result of the constituent part comprises code coverage of the constituent part.

24. The apparatus according to claim 23, wherein the at least one constituent part comprises one or more of the following: at least one branch in the difference part, at least one method in the difference part, or at least one class in the difference part.

25. A computing device cluster, wherein the cluster comprises at least one computing device, each device in the at least one computing device comprises at least one processor and at least one memory, the at least one memory stores computer-readable instructions, and the at least one processor executes the computer-readable instructions, for the cluster to perform the method according to any one of claims 1 to 12.

26. A computer storage medium, storing a computer program, wherein when the computer program is executed by a processor, the method according to any one of claims 1 to 12 is implemented.

27. A computer program product, comprising a computer program, wherein when the computer program is executed by a processor, the method according to any one of claims 1 to 12 is implemented.
